# EUROPÄISCHE PATENTSCHRIFT

(11) **EP 0 458 025 B1**
(45) Veröffentlichungstag und Bekanntmachung des Hinweises auf die Patenterteilung: **26.01.1994**
(21) Anmeldenummer: 91104077.2
(22) Anmeldetag: 15.03.1991
(51) Int. Cl.: G01P 21/02

(54) **Verfahren zur Ermittlung eines abgeleiteten Drehzahlwertes für die mittlere Hinterraddrehzahl eines Fahrzeuges**
Method for determining a derived number of revolutions corresponding to the average rear wheel speed of a motor vehicle
Procédé pour déterminer une valeur estimée de nombre de tours moyens des roues arrière d'un véhicule

(30) Priorität: 29.03.1990 DE 4010127
(43) Veröffentlichungstag der Anmeldung: 27.11.1991
(73) Patentinhaber: SIEMENS AKTIENGESELLSCHAFT, 80333 München (DE); MERCEDES-BENZ AG, 70327 Stuttgart (DE)
(72) Erfinder: Lutz, Ludwig, W-8411 Sinzing (DE); Grassmann, Norbert, W-8400 Regensburg (DE); Schöb, Reinhold, W-7024 Sielmingen (DE); Eilert, Gerd, W-7052 Schwaikheim (DE); Wolf, Karl-Heinz, W-7000 Stuttgart (DE); Blanz, Martin, W-7141 Schwieberdingen (DE)
(74) Vertreter: Fuchs, Franz-Josef, Dr.-Ing.

(56) Entgegenhaltungen:
- EP-A- 0 038 606
- WO-A-89/04783
- US-A- 4 352 063

## Beschreibung

Die Erfindung betrifft ein Verfahren zur Ermittlung eines abgeleiteten Drehzahlwertes für die Hinterraddrehzahlen eines Fahrzeuges mit zumindest zuschaltbaren Allradantrieb gemäß Oberbegriff von Patentanspruch 1.

Bei elektrischen Antriebs-, Brems- oder Lenksystemen wird die Drehzahl der einzelnen Räder mit Hilfe von Sensoren erfaßt. Dazu sind an jedem der Vorderräder Sensoren angeordnet. Um die Drehzahl der beiden Hinterräder zu erfassen, genügt es die Drehzahl der Hinterachsantriebswelle zu messen und daraus den Drehzahlwert der Hinterräder anhand des Übersetzungsverhältnisses von Hinterachsantriebswelle zur Hinterradantriebswelle abzuleiten. Eine derartige Vorrichtung ist in WO-A-8 904 783 beschrieben.

Beim Stand der Technik wird das individuelle Übersetzungsverhältnis der jeweiligen Hinterachse in einem Festspeicher abgelegt. Zur Ermittlung des abgeleiteten Drehzahlwertes für die Hinterraddrehzahlen wird die von dem Sensor an der Hinterachsantriebswelle gemessene Drehzahl mit dem im Festspeicher abgelegten Wert multipliziert.

Bei verschiedenen Übersetzungsverhältnissen der jeweiligen Hinterachsen ist für jedes Übersetzungsverhältnis eine eigene Version von Steuergeräten notwendig. Dies erfordert erhöhten Aufwand in der Produktionssteuerung und Lagerhaltung.

Alternativ dazu kann der Ausgleich des Übersetzungsverhältnisses durch eine entsprechende Ausgestaltung des Impulsrades an der Hinterachsantriebswelle zu den Impulsrädern an den Vorderrädern erfolgen. Wird beispielsweise ein induktiv wirkender Arbeitselementarsensor verwendet, der in Verbindung mit dem Impulsrad zu einem Drehzahlsensor wird, ergibt sich die zu bestimmende Drehzahl aus der Frequenz der Signalimpulse dividiert durch die Anzahl der Zähne des Impulsrades. Somit besteht die Möglichkeit, durch eine unterschiedliche Anzahl der Zähne des Impulsrades an der Hinterachsantriebswelle zu der Anzahl der Zähne der Impulsräder an den Vorderrädern das Übersetzungsverhältnis auszugleichen. Dieser Ausgleich ist u.U. mit einem systematischen Fehler behaftet, wenn die Anzahl der Zähne der Vorderräder dividiert durch das Übersetzungsverhältnis keine ganze Zahl ergibt und die Anzahl der Zähne des Impulsrades an der Hinterachsantriebswelle somit lediglich ein gerundeter Wert ist.

Bei verschiedenen Übersetzungsverhältnissen müssen somit verschiedene Impulsräder eingebaut werden.

Aufgabe der vorliegenden Erfindung ist es daher, ein Verfahren zu schaffen, welches es erlaubt, für alle vorkommenden Übersetzungsverhältnisse nur eine einzige Version von Steuergerät zu verwenden.

Die erfindungsgemäße Lösung dieser Aufgabe ist im unabhängigen Anspruch 1 angegeben.

Die Erfindung wird anhand einer Figur und der Bezugszeichen-Begriffsliste näher erläutert.

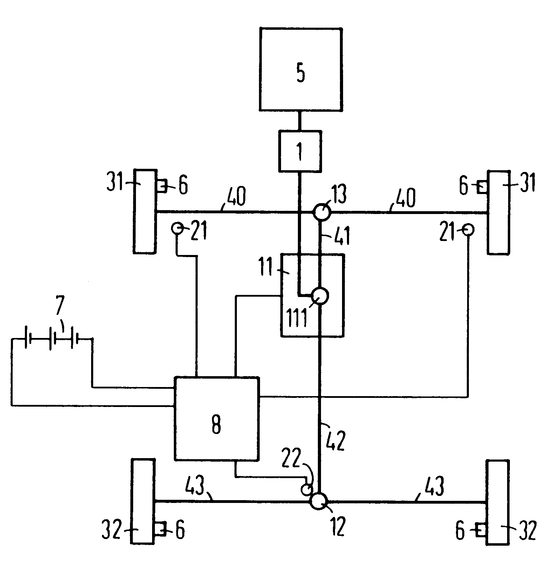

Die Figur zeigt in schematischer Darstellung den Antriebsstrang eines 4-radgetriebenen Kraftfahrzeuges, bestehend aus Motor 5, Getriebe 1, einem Verteilergetriebe 11 mit einer Verteilergetriebesperre 111, einem Differential 12 an der Hinterachse und einem Differential 13 an der Vorderachse. Zur Messung der Raddrehzahlen sitzt an den Vorderrädern 31 jeweils ein Drehzahlsensor 21. Ein weiterer Drehzahlsensor 22 sitzt an der Hinterachsantriebswelle 42. Die Drehzahlsensoren 21 und 22 liefern die von ihnen gemessenen Werte an das Steuergerät 8. Die von den Drehzahlsensoren 21 gelieferten Werte entsprechen den Drehzahlen der Vorderräder 31. Die Drehzahl der beiden Hinterräder 32 wird aus dem vom Drehzahlsensor 22 gelieferten Wert abgeleitet. Dazu muß der vom Drehzahlsensor 22 gelieferte Wert mit dem Übersetzungsverhältnis im Differential 12 multipliziert werden, um den Drehzahlwert der Hinterräder 32 zu erhalten. Der Drehzahlwert der Hinterräder 32 entspricht dabei dem Drehzahlwert der Hinterradantriebswelle 43.

Das hier beschriebene Verfahren sieht vor, daß das Steuergerät 8 das Übersetzungsverhältnis selbst errechnet und fortan den vom Drehzahlsensor 22 gelieferten Wert mit einem Faktor multipliziert, der dem errechneten Übersetzungsverhältnis entspricht. Das Errechnen des Übersetzungsverhältnisses findet immer dann automatisch statt, wenn zuvor die Stromversorgung mit der Batterie 7 unterbrochen war oder, wenn manuell ein Reset für das Steuergerät 8 durchgeführt wurde. Während des Errechnens wird vom Steuergerät 8 die Verteilergetriebesperre 111 aktiviert. Bei aktivierter Verteilergetriebesperre 111 drehen sich die Hinterradantriebswelle 43 und die Vorderradantriebswelle 40 mit gleicher Drehzahl (unabhängig von Reifendruck oder Profilhöhe).

Aus den Werten der Drehzahlsensoren 21 wird ein Mittelwert gebildet. Damit ist die Fehlerquelle, daß die beiden Vorderräder eine unterschiedliche Drehzahl haben (z.B. auf unterschiedlich griffiger Fahrbahn) eliminiert. Ein Durchdrehen eines der Hinterräder beeinflußt die Messung ebenfalls nicht, da aufgrund der Funktionsweise des Differentials 12 der an der Hinterachsantriebswelle 42 vom Sensor 22 gemessene Wert immer einem Mittelwert aus den Drehzahlwerten der beiden Hinterradantriebswellen 43 entspricht. Zur Errechnung des Übersetzungsverhältnisses wird nun der Quotient aus dem Mittelwert der von den Drehzahlsensoren 21 gelieferten Werte und dem vom Drehzahlsensor 22 gelieferten Wert gebildet. Dieser Quotient stellt das Übersetzungsverhältnis dar.

Aufgrund der unterschiedlichen Kurvenradien für die Vorder- und die Hinterachse ist es vorteilhaft, wenn das Übersetzungsverhältnis nur dann berechnet wird, wenn sich das Fahrzeug in Geradeausfahrt befindet.

Da bei einem Bremsvorgang Schwingungen auf den Signalen der Drehzahlsensoren auftreten können, die wiederum durch Mittelwertbildung ausgeglichen werden müssen, ist es vorteilhaft, den Faktor nur dann zu bestimmen, wenn die Bremsen 6 nicht betätigt werden.

Die Drehzahlsensoren 21 und 22 liefern impulsförmige Signale. Zum Errechnen des Übersetzungsverhältnisses zählt das Steuergerät 8 über eine bestimmte Zeit die von den Drehzahlsensoren 21 und 22 gelieferten Impulse. Je schneller sich die Räder drehen, umso mehr Impulse pro Zeiteinheit erhält das Steuergerät, wodurch sich die Auflösung verbessert. Daher ist es vorgesehen, den Lernmodus erst ab einer bestimmten Mindestgeschwindigkeit zu aktivieren.

Anstelle des in diesem Ausführungsbeispiel beschriebenen Verteilergetriebes 11 mit der Verteilergetriebesperre 111 kann auch eine andere Vorrichtung verwendet werden. Wesentlich ist dabei, daß diese Vorrichtung derart ansteuerbar ist, daß bei der Ansteuerung ein Mechanismus derart betätigt wird, daß eine schlupffreie Verbindung zwischen der Vorderachsantriebswelle 41 und Hinterachsantriebswelle 43 des Fahrzeuges besteht.

Wird gemäß dem im unabhängigen Patentanspruch beschriebenen Verfahren der Faktor bestimmt, kann eine Plausibilitätsprüfung dahingehend vorgenommen werden, daß das sich aus dem bestimmten Faktor und der Anzahl der Zähne der Impulsräder ergebende Übersetzungsverhältnis überprüft wird mit abgespeicherten Werten des Übersetzungsverhältnisses, die in der Produktionsserie eingebaut werden. Stimmt das so ermittelte Übersetzungsverhältnis innerhalb eines bestimmten Schwellwertes mit einem der abgespeicherten Übersetzungsverhältnisse überein, wird der Faktor zum Ableiten der Hinterraddrehzahl entsprechend diesem abgespeicherten Übersetzungsverhältnis bestimmt. Eine geeignete Größenordnung für einen solchen Schwellwert kann bei ca. 2 % liegen. Weicht das ermittelte Übersetzungsverhältnis um Werte oberhalb eines vorgegebenen Schwellwertes von jedem der abgespeicherten Übersetzungsverhältnisse ab, wird geschlossen, daß ein falsches Bauteil (Impulsrad, Hinterachsdifferential) eingebaut wurde. Eine geeignete Größenordnung für diesen Schwellwert kann dabei ca. 5 % betragen.

### Bezugszeichenliste / Begriffsliste

- Drehzahlwert
- 1: Getriebe
- 5: Motor
- 6: Bremsen
- 7: Batterie
- 8: Steuergerät
- 11: Verteilergetriebe
- 12: Differential
- 13: Differential
- 21: Drehzahlsensoren (Vorderrad)
- 22: Drehzahlsensor (Hinterachsantriebswelle)
- 31: Vorderrad
- 32: Hinterrad
- 40: Vorderradantriebswelle
- 41: Vorderachsantriebswelle
- 42: Hinterachsantriebswelle
- 43: Hinterradantriebswelle
Hinterraddrehzahlen
- 111: Verteilergetriebesperre

## Patentansprüche

1. Verfahren zur Ermittlung eines abgeleiteten Drehzahlwertes für die Hinterraddrehzahlen eines Fahrzeuges mit zumindest zuschaltbarem Allradantrieb,
- mit einer Vorrichtung (111), die aufgrund eines Ansteuersignals eine schlupffreie Verbindung zwischen den Antriebswellen des Fahrzeuges bewirkt,
- mit Drehzahlsensoren (21, 22) an jedem Vorderrad (31) und an der Hinterachsantriebswelle (42) und
- mit einem Steuergerät (8),
- wobei der Drehzahlwert der Hinterräder (32) von der Drehzahl der Hinterachsantriebswelle (42) anhand des Übersetzungsverhältnisses der Hinterachsantriebswelle (42) zur Hinterradantriebswelle (43) und von der zeitlichen Abfolge von Signalen eines Drehzahlsensors abgeleitet wird,
**dadurch gekennzeichnet,**
daß ermittelt wird, ob eine schlupffreie Verbindung zwischen der Vorderachsantriebswelle (41) und der Hinterachsantriebswelle (42) des Fahrzeugs besteht und
daß bei Vorliegen dieser Bedingung in dem Steuergerät (8) wenigstens eine der gemessenen Vorderraddrehzahlen mit der von dem Drehzahlsensor (22) ermittelten Drehzahl für die Hinterachsantriebswelle ins Verhältnis gesetzt wird und so ein Faktor bestimmt wird, mit dem der von dem Drehzahlsensor (22) ermittelte Wert der Drehzahl für die Hinterachsantriebswelle multipliziert wird, um den abgeleiteten Drehzahlwert für die Hinterräder zu ermitteln.

2. Verfahren nach Anspruch 1,
**dadurch gekennzeichnet,** daß
- der Faktor nur dann bestimmt wird, wenn sich das Fahrzeug in Geradeausfahrt befindet.

3. Verfahren nach einem der Ansprüche 1 oder 2,
**dadurch gekennzeichnet**, daß
- der Faktor nur dann bestimmt wird, wenn die Bremsen (6) nicht betätigt sind.

4. Verfahren nach einem dedr Ansprüche 1 bis 3,
**dadurch gekennzeichnet**, daß
- der Faktor nur dann bestimmt wird, wenn eine Mindestgeschwindigkeit überschritten ist.

5. Verfahren nach einem der Ansprüche 1 bis 4,
**dadurch gekennzeichnet**, daß
- der Faktor nur dann bestimmt wird, wenn zuvor die Spannungsversorgung (7) zum Steuergerät (8) unterbrochen war.

6. Verfahren nach einem der Ansprüche 1 bis 5,
**dadurch gekennzeichnet**,
daß aus dem Faktor sowie den bekannten zeitlichen Abfolgen der Impulse der Drehzahlsignale von wenigstens einem Vorderrad und dem Drehzahlsensor der Hinterachsantriebswelle das Übersetzungsverhältnis des Hinterachsdifferentials bestimmt wird.

7. Verfahren nach Anspruch 6,
**dadurch gekennzeichnet**,
daß das bestimmte Übersetzungsverhältnis mit den sich aufgrund der verschiedenen Typen der Hinterachsdifferentiale ergebenden Übersetzungsverhältnissen verglichen wird und
daß bei Abweichungen innerhalb eines vorgegebenen Schwellwertes, insbesondere 2 %, des bestimmten Übersetzungsverhältnisses von dem nächstliegenden Übersetzungsverhältnis der sich aufgrund der verschiedenen Typen der Hinterachsdifferentiale ergebenden Übersetzungsverhältnisse der bestimmte Faktor so korrigiert wird, daß das bestimmte Übersetzungsverhältnis mit dem nächstliegenden Übersetzungsverhältnis übereinstimmt.

8. Verfahren nach einem der Ansprüche 6 oder 7,
**dadurch gekennzeichnet**,
daß das bestimmte Übersetzungsverhältnis mit den sich aufgrund der verschiedenen Typen der Hinterachsdifferentiale ergebenden Übersetzungsverhältnissen verglichen wird und
daß bei Abweichungen außerhalb eines vorgegebenen Schwellwertes, insbesondere 5 %, des bestimmten Übersetzungsverhältnisses von dem nächstliegenden Übersetzungsverhältnis der sich aufgrund der verschiedenen Typen der Hinterachsdifferentiale ergebenden Übersetzungsverhältnisse geschlossen wird, daß ein falsches Bauteil eingebaut wurde.

## Claims

1. Method for determining a derived speed-of-revolution value for the rear wheel speeds of a vehicle having at least the option of all-wheel drive,
- having a device (111) which, on the basis of a drive signal, brings about a slip-free connection between the drive shafts of the vehicle,
- having speed-of-revolution sensors (21, 22) on each front wheel (31) and on the rear-axle drive shaft (42) and
- having a control device (8),
- the speed-of-revolution value of the rear wheels (32) being derived from the speed of revolution of the rear-axle drive shaft (42) with reference to the transmission ratio of the rear-axle drive shaft (42) with respect to the rear-wheel drive shaft (43), and from the time sequence of signals of a speed-of-revolution sensor,
characterized in that it is determined whether a slip-free connection is present between the front-axle drive shaft (41) and the rear-axle drive shaft (42) of the vehicle, and in that, when this condition is fulfilled in the control device (8), at least one of the measured front-wheel speeds is related to the speed of revolution determined by the speed-of-revolution sensor (22) and thus a factor is determined with which the value of the speed of revolution for the rear-axle drive shaft determined by the speed-of-revolution sensor (22) is multiplied in order to determine the derived speed-of-revolution value for the rear wheels.

2. Method according to Claim 1, characterized in that
- the factor is only determined when the vehicle is travelling straight ahead.

3. Method according to one of Claims 1 or 2, characterized in that
- the factor is only determined when the brakes (6) are not actuated.

4. Method according to one of Claims 1 to 3, characterized in that
- the factor is only determined when a minimum speed is exceeded.

5. Method according to one of Claims 1 to 4, characterized in that
- the factor is only determined when the voltage supply (7) to the control device (8) has been previously disconnected.

6. Method according to one of Claims 1 to 5, characterized in that the transmission ratio of the rear-axle differential is determined from the factor and the known time sequences of the pulses of the speed-of-revolution signals of at least one front wheel and the speed-of-revolution sensor of the rear-axle drive shaft.

7. Method according to Claim 6, characterized in that the specific transmission ratio is compared with the transmission ratios which result from the different types of rear-axle differentials, and in that in the case of deviations within a predetermined threshold value, in particular 2 %, of the specific transmission ratio from the next transmission ratio of the transmission ratios which result from the different types of rear-axle differentials, the specific factor is corrected in such a way that the specific transmission ratio corresponds to the next transmission ratio.

8. Method according to one of Claims 6 or 7, characterized in that the specific transmission ratio is compared with the transmission ratios which result from the different types of rear-axle differentials, and in the case of deviations outside a predetermined threshold value, in particular 5 %, of the specific transmission ratio from the next transmission ratio of the transmission ratios which result from the different types of rear-axle differentials it is concluded that an incorrect component has been installed.

## Revendications

1. Procédé pour déterminer une valeur dérivée des vitesses de rotation des roues arrière d'un véhicule, comportant au moins un système d'entraînement toutes roues motrices pouvant être branché et ayant,
- un dispositif (111), qui sur la base d'un signal de commande, réalise une liaison sans glissement entre les arbres d'entraînement du véhicule,
- des capteurs (21,22) de la vitesse de rotation montés sur chaque roue avant (31) et sur l'arbre d'entraînement (42) de l'essieu arrière, et
- un appareil de commande (8),
- la valeur de la vitesse de rotation des roues arrière (32) étant dérivée de la vitesse de rotation de l'arbre d'entraînement (42) de l'essieu arrière au moyen du rapport de transmission de l'arbre d'entraînement (42) de l'essieu arrière à l'arbre d'entraînement (43) de l'essieu arrière, et de la succession dans le temps de signaux d'un capteur de la vitesse de rotation,
caractérisé par le fait
qu'on détermine si une liaison sans glissement existe entre l'arbre d'entraînement (40) de l'essieu avant et l'arbre d'entraînement (42) de l'essieu arrière du véhicule, et
que lors de la présence de cette condition, dans l'appareil de commande (8), au moins l'une des vitesses de rotation mesurées de l'essieu avant est comparée à la vitesse de rotation, déterminée par le capteur (22) de la vitesse de rotation, de l'arbre d'entraînement de l'essieu arrière et qu'ainsi est déterminé un facteur, avec lequel la valeur, qui est déterminée par le capteur (22) de la vitesse de rotation, est multipliée par la vitesse de rotation des roues arrière, pour la détermination de la vitesse de rotation dérivée pour les roues arrière.

2. Procédé suivant la revendication 1, caractérisé par le fait que
- le facteur est déterminé uniquement lorsque le véhicule se déplace en ligne droite.

3. Procédé suivant l'une des revendications 1 ou 2 caractérisé par le fait que
- le facteur est déterminé uniquement lorsque les freins (6) ne sont pas actionnés.

4. Procédé suivant l'une des revendications 1 à 3, caractérisé par le fait que
- le facteur est déterminé uniquement lorsqu'une vitesse minimale est dépassée.

5. Procédé suivant l'une des revendications 1 à 4, caractérisé par le fait que
- le facteur est déterminé uniquement lorsqu'auparavant l'alimentation en tension (7) de l'appareil de commande (8) a été interrompue.

6. Procédé suivant l'une des revendications 1 à 5, caractérisé par le fait que le rapport de transmission du différentiel de l'essieu arrière est déterminé à partir du facteur ainsi que des successions connues dans le temps des impulsions des signaux de la vitesse de rotation d'au moins une roue avant et du capteur de la vitesse de rotation de l'arbre d'entraînement de l'essieu arrière.

7. Procédé suivant la revendication 6, caractérisé par le fait
que le rapport de transmission déterminé est comparé aux conditions de transmission que l'on obtient sur la base des différents types des différentiels d'essieux arrière, et
que lors d'écarts inférieurs à une valeur de seuil prédéterminée, notamment 2 %, du rapport de transmission déterminé par rapport au rapport de transmission immédiatement suivant parmi les rapports de transmission obtenus sur la base des différents types des différentiels d'essieux arrière, le facteur déterminé est corrigé de telle sorte que le rapport de transmission déterminé coïncide avec le rapport de transmission immédiatement suivant.

8. Procédé suivant l'une des revendications 6 ou 7,
caractérisé par le fait que le rapport de transmission déterminé est comparé aux rapports de transmission obtenus sur la base des différents types des différentiels d'essieux arrière, et
que dans le cas d'écarts supérieurs à une valeur de seuil prédéterminée, notamment 5 %, du rapport de transmission déterminé par rapport au rapport de transmission immédiatement suivant faisant partie des rapports de transmission obtenus à partir des différents types de différentiels d'essieux arrière, on en conclut qu'un mauvais élément a été monté.
